Europäisches Patentamt

European Patent Office

Office européen des brevets

(11) Publication number: **0 244 823**

**A2**

(12) **EUROPEAN PATENT APPLICATION**

(21) Application number: 87106495.2

(51) Int. Cl.⁴: **C09D 3/66**

(22) Date of filing: 05.05.87

(30) Priority: 07.05.86 JP 103163/86

(43) Date of publication of application:
**11.11.87 Bulletin 87/46**

(84) Designated Contracting States:
**DE FR GB NL**

(71) Applicant: **DAINIPPON INK AND CHEMICALS, INC.**
**35-58, Sakashita 3-chome**
**Itabashi-ku, Tokyo 174(JP)**

(72) Inventor: **Shirai, Nobuyoshi**
**4-17-401, Jyonan-cho**
**Izumi-ohtsu-shi Osaka-fu(JP)**
Inventor: **Takeda, Hirofumi**
**3-188-2, Ohta**
**Yao-shi Osaka-fu(JP)**
Inventor: **Murakaimi, Haruhiko P.T. Pardic**
**Jaya Chemicals**
**6F1. Skyline Bldg. J1.M.H.Thamrin No. 6**
**Jakarta(ID)**
Inventor: **Kawai, Hitomi**
**14-21, Kotobuki-cho**
**Izumi-ohtsu-shi Osaka-fu(JP)**

(74) Representative: **Kraus, Walter, Dr. et al**
**Patentanwälte Kraus, Weisert & Partner**
**Thomas-Wimmer-Ring 15**
**D-8000 München 22(DE)**

(54) Resin composition for use in powder paint.

(57) A resin composition for use in a powder paint, consisting essentially of (A) 60 to 97 parts by weight of a polyester having an acid value of 15 to 100 KOH mg/g and a softening point, determined by the ring and ball method, of 70 to 150°C and obtained by reacting (a-1) a polyester having a hydroxyl value of 10 to 70 KOH mg/g and an acid value of 2 to 10 KOH mg/g and (a-2) a halogenated polycarboxylic acid or a halogenated polycarboxylic anhydride, and (B) 40 to 3 parts by weight of a polyepoxy compound.having at least 2 epoxy groups per molecule.

EP 0 244 823 A2

This invention relates to an improved resin composition for use in a powder paint. More specifically, it relates to a resin composition for use in a powder paint, comprising a polyester having a specific acid value obtained by reacting an intermediate polyester having a specific hydroxyl value and a specific acid value with a halogenated polycarboxylic acid or its anhydride, and a polyepoxy compound as essential ingredients. The composition gives a coated film having excellent appearance, mechanical strength and corrosion resistance and has markedly improved blocking resistance.

A powder paint comprising a polyester resin containing a carboxyl-containing polyester resin and a polyepoxy compound has been utilized in a wide range of applications because of its excellent mechanical strength, adhesion and corrosion resistance. It is known from Japanese Patent Publications Nos. 15506/1980 and 29342/1983, for example, that in the preparation of such a powder paint, a carboxyl-containing acid anhydride obtained by reacting a hydroxyl-containing polyester resin with a polyfunctional organic carboxylic acid anhydride is used as a base polyester resin to be combined with the polyepoxy compound.

Since, however, the powder paints described in these prior references, in many cases, are such that the polyepoxy compound used is a diglycidyl ether of bisphenol A, they have poor weatherability which limits the range of their application. In an attempt to eliminate this defect, investigations have heretofore been made on the type of the polyepoxy compound used and the reduction of its amount. Such attempts, however, have been unsuccessful because the toxicity of the polyepoxy compounds and the reduced blocking resistance of the resulting composition constitute a setback. In particular, when an epoxy resin of the bisphenol A diglycidyl ether-type having an epoxy equivalent of as small as not more than 700 is used or the amount of such a type of epoxy resin is decreased, the blocking resistance of the resulting composition is markedly reduced.

The blocking resistance is one particularly important practical property of the powder paint. Melt-adhesion or aggregation of the particles of the powder paint which occurs either partly or wholly during storage depending upon environmental conditions such as heat and loads is called "blocking phenomenon". The "blocking resistance", therefore, means the difficulty of occurrence of this phenomenon. A powder paint which has undergone blocking cannot be coated.

It is an object of this invention to remove the aforesaid various defects of the prior art. Our investigations have led to the discovery that this object can be achieved by using a polyester resin having a specific acid value and a specific softening point obtained by reacting a polyester resin having a hydroxyl and an acid value within specific ranges (an intermediate polyester, as it were) with a halogenated polycarboxylic acid or a halogenated polycarboxylic acid anhydride.

According to this invention, there is provided a resin composition for use in a powder paint, which has much improved blocking resistance and can give a coated film having excellent appearance, mechanical strength, corrosion resistance and weatherability and which consists essentially of (A), as a base polymer component, 60 to 97 parts by weight of a polyester having an acid value of 15 to 100 KOH mg/g and a softening point, determined by the ring and ball method, of 70 to 150°C and obtained by reacting (a-l) a polyester having a hydroxyl value of 10 to 70 KOH mg/g and an acid value of 2 to 10 KOH mg/g and (a-2) a halogenated polycarboxylic acid or a halogenated polycarboxylic anhydride, and (B), as a curing agent component, 40 to 3 parts by weight of a polyepoxy compound having at least 2 epoxy groups per molecule.

For simplicity and convenience, the units of the acid and hydroxyl values appearing hereinafter in the specification will be omitted.

The polyester resin (A) as one essential ingredient of the composition of this invention is a polyester resin having an acid value of 15 to 100, preferably 20 to 80, and more preferably 25 to 75, and a softening point of 70 to 150°C, preferably 90 to 130°C, and obtained by reacting the hydroxyl-containing intermediate polyester (a-l) with the halogenated polycarboxylic acid or the halogenated polycarboxylic anhydride (a-2).

If the polyester resin (A) has an acid value of less than 15, a coated film prepared by using the resulting composition has insufficient mechanical strength. If its acid value exceeds 100, a powder paint comprising the resulting composition has reduced storage stability. Hence, the reaction proceeds during storage, and this may finally lead to a coated film having reduced smoothness.

If the softening point of the polyester (A) is lower than 70°C, the resulting composition has reduced blocking resistance and becomes useless. If it is higher than 150°C, poor coated film smoothness results.

There is no particular restriction on the method of reacting the hydroxyl-containing intermediate polyester (a-l) with the halogenated polycarboxylic acid or its anhydride (a-2) to form the polyester resin (A). Typical examples are the addition reaction of the intermediate polyester (a-l) with the halogenated polycarboxylic anhydride (a-2) and the condensation reaction of the intermediate polyester (a-l) with the halogenated polycarboxylic acid (a-2).

The intermediate polyester (a-l) has a hydroxyl value of l0 to 70, preferably l3 to 50, and an acid value of 2 to l0, preferably 3 to 8, and may be branched or linear. If its hydroxyl value is less than l0 or larger than 70, or its acid value is less than 2 or larger than l0, the properties of a coated film obtained from the resulting composition are undesirably deteriorated.

There is no particular limitation on the method of preparing the intermediate polyester (a-l), and known conventional methods can be applied directly. As an acid component and an alcohol component, known dibasic acids and/or polybasic acids and dihydric alcohols (glycols) and/or polyhydric alcohols can be used. Typical examples of the acid component include terephthalic acid, isophthalic acid, phthalic acid, methylterephthalic acid, trimellitic acid and pyromellitic acid and anhydrides of these acids; and adipic acid, sebacic acid, succinic acid, maleic acid, fumaric acid, tetrahydrophthalic acid, methyl-tetrahydrophthalic acid, hexahydrophthalic acid and methyl-hexahydrophthalic acid and anhydrides of these acids. Typical examples of the alcohol component include ethylene glycol, propylene glycol, l,3-butanediol, l,4-butanediol, l,6-hexanediol, neopentyl glycol, isopentyl glycol, bishydroxyethyl terephthalate, hydrogenated bisphenol A, hydrogenated bisphenol A/ethylene oxide adduct, hydrogenated bisphenol A/propylene oxide adduct, trimethylolethane, trimethylolpropane, glycerol, pentaerythritol and 2,2,4-trimethylpentane-l,3-diol. Monoepoxy compounds may also be used as the glycols in the present invention.

The halogenated polycarboxylic acid or its anhydride (a-2) to be reacted with the intermediate polyester (a-l) may include halogenated aromatic, aliphatic or alicyclic organic di-or higher carboxylic acids or anhydrides thereof. Typical examples include tetrahaloterephthalic acids such as tetrachloroterephthalic acid and tetrabromoterephthalic acid; tetrahaloisophthalic acids such as tetrachloroisophthalic acid and tetrabromoisophthalic acid; tetrahalophthalic acids and anhydrides thereof such as tetrachlorophthalic acid, its anhydride, tetrabromophthalic acid, its anhydride, tetraiodophthalic acid, its anhydride, tetrachlorophthalic acid and its anhydride; dichlorosuccinic acid and dichlorosuccinic anhydride; halogenated hemimellitic acids and anhydrides thereof such as monochlorohemimellitic acid and monochlorohemimellitic anhydride; halogenated trimellitic acid and anhydrides thereof such as monochlorotrimellitic acid and monochlorotrimellitic anhydride; halogenated pyromellitic acid and anhydrides thereof such as dibromopyromellitic acid and dibromopyromellitic anhydride; halogenated naphthalic acid and anhydrides thereof such as dichloronaphthalic acid and dichloronaphthalic anhydride; halogenated diphenic acid and anhydrides thereof such as tetrabromodiphenic acid and tetrabromodiphenic anhydride; halogenated "Himic acid" and anhydrides thereof such as a dichlorinated product of "Himic acid" (a polycarboxylic acid manufactured by Hitachi Chemical Co., Ltd.) or a dichlorinated product of its anhydride; and Het acid (hexachloroendomethylenetetrahydrophthalic acid) and its anhydride.

These halogenated polycarboxylic acids or anhydrides thereof may be used singly or in combination with each other or with ordinary non-halogenated organic polycarboxylic acids or anhydrides thereof.

In order to obtain sufficient film properties, it is preferred that l5 to l00% by weight, based on the total amount of the halogenated polycaroxylic acid or its anhydride and the ordinary polycarboxylic acid or its anhydride, of the compound (a-2) consists of at least one trifunctional or higher (halogenated) polycarboxylic acid or its anhydride.

The polyepoxy compound (B) as the other essential ingredient of the composition of the invention denotes a compound having at least two epoxy groups per molecule. Typical examples include a diglycidyl ether of bisphenol A or bisphenol F, a glycidyl ester ether of hydroxybenzoic acid; polyglycidyl ethers of polyhydric alcohols such as a diglycidyl ether of ethylene glycol and a triglycidyl ether of trimethylolpropane; diglycidyl esters of dibasic acids such as diglycidyl terephthalate; and triglycidyl isocyanurate.

The resin composition of the invention for use in a powder paint comprises the polyester resin (A) and the polyepoxy compound (B) as essential ingredients. The proportions of these essential ingredients are such that 60 to 97 parts by weight of the component (A) and 40 to 3 parts by weight of the component (B) are used, preferably 60 to 94 parts by weight of the component (A) and 40 to 6 parts by weight of the component (B) are used.

The composition of this invention may further comprise a known catalyst for promoting the curing reaction, and a flow control agent, such as polymers of long-chain alkyl esters of acrylic acid or fluorine compounds, for preventing cratering on the coated film surface and to improve its smoothness further.

A powder paint may be prepared from the composition of this invention by any known method.

The powder paint may be applied by known methods such as electrostatic spraying or fluidized dipping. Subsequent baking gives a coated film having excellent properties.

The following Referential Examples, Examples and Comparative Examples illustrate the present invention more specifically. Parts and percentages in these examples are by weight unless otherwise specified.

3

REFERENTIAL EXAMPLE I

Preparation of intermediate polyester (a-I):-

A mixture composed of 83 parts of ethylene glycol, 327 parts of neopentyl glycol, 435 parts of dimethyl terephthalate and 0.4 part of zinc acetate was heated gradually to 2I0°C while the resulting methanol was removed out of the reaction system. The mixture was further maintained at this temperature for 2 hours to continue alcohol exchange reaction.

Thereafter, 6 parts of trimethylolpropane, I49 parts of terephthalic acid, 224 parts of isophthalic acid and 0.5 part of di-n-butyltin oxide were added, and the mixture was heated to 240°C over the course of 8 hours. Furthermore, dehydrocondensation was carried out at the same temperature to give an intermediate polyester having a hydroxyl value of I4 and an acid value of 7 (a-I-I).

REFERENTIAL EXAMPLE 2

Preparation of intermediate polyester (a-I):-

Alcohol exchange reaction was carried out in the same way as in Referential Example I except that the amounts of ethylene glycol, neopentyl glycol and dimethyl terephthalate were changed to 86, 340, and 452 parts, respectively. Then, dehydrocondensation reaction was carried out in the same way as in Referential Example I except that the amount of trimethylolpropane was changed to 20 parts. An intermediate polyester having a hydroxyl value of 40 and an acid vlaue of 6 (a-I-2) was obtained.

REFERENTIAL EXAMPLE 3

Preparation of intermediate polyester (a-I):-

Referential Example I was repeated except that trimethylolpropane was not used, and the amount of neopentyl glycol was changed to 344 parts. An intermediate polyester having a hydroxyl value of I0 and an acid value of I0 (a-I-3) was obtained.

REFERENTIAL EXAMPLE 4

Preparation of intermediate polyester (a-I):-

Alcohol exchange reaction was carried out in the same way as in Referential Example I except that the amounts of ethylene glycol, neopentyl glycol and dimethyl terephthalate were changed to I4I, 236 and 440 parts, respectively. Thereafter, dehydrocondensation reaction was carried out in the same way as in Referential Example I except that the amounts of trimethylolpropane, terephthalic acid and isophthalic acid were changed to 5, I72 and 235 parts, respectively. An intermediate polyester having a hydroxyl value of 6 and an acid value of 20 (a-I-4) was obtained.

REFERENTIAL EXAMPLE 5

Preparation of polyester resin (A):-

The intermediate polyester (a-I-I) (895 parts) was maintained at 200°C, and 34 parts of monochlorotrimellitic anhydride was added. The mixture was reacted at the same temperature for 2 hours to obtain a polyester resin having an acid value of 25 and a softening point of I25°C (A-I).

REFERENTIAL EXAMPLE 6

Preparation of polyester resin (A):-

Referential Example 5 was repeated except that the amount of monochlorotrimellitic anhydride was changed to 17 parts, and 21.5 parts of tetrachlorophthalic anhydride was further used. A polyester resin having an acid value of 24 and a softening point of 122°C (A-2) was obtained.

REFERENTIAL EXAMPLE 7

Preparation of polyester resin (A):-

Referential Example 5 was repeated except that monochlorotrimellitic anhydride was not used and 21 parts of trimellitic anhydride and 13 parts of tetrachlorophthalic anhydride were used further. A polyester resin having an acid value of 25 and a softening point of 122°C (A-3) was obtained.

REFERENTIAL EXAMPLE 8

Preparation of polyester resin (A):-

Referential Example 7 was repeated except that 10 parts of tetrafluorophthalic anhydride was used instead of 13 parts of tetrachlorophthalic anhydride, and the amount of trimellitic anhydride was changed to 20 parts. A polyester having an acid value of 24 and a softening point of 120°C (A-4) was obtained.

REFERENTIAL EXAMPLE 9

Preparation of polyester resin A:-

Referential Example 7 was repeated except that 34 parts of tetrabromophthalic anhydride was used instead of 13 parts of tetrachlorophthalic anhydride, and the amount of trimellitic anhydride was changed to 15 parts. A polyester resin having an acid value of 26 and a softening point of 123°C (A-5) was obtained.

REFERENTIAL EXAMPLE 10

Preparation of polyester resin A:-

Referential Example 7 was repeated except that 80 parts of tetraiodophthalic anhydride was used instead of 13 parts of tetrachlorophthalic anhydride. A polyester resin having an acid value of 25 and a softening point of 180°C (A-6) was obtained.

REFERENTIAL EXAMPLE 11

Preparation of polyester resin A:-

Referential Example 7 was repeated except that 12 parts of dichlorosuccinic anhydride was used instead of 13 parts of tetrachlorophthalic anhydride, and the amount of trimellitic anhydride was changed to 15 parts. A polyester resin having an acid value of 24 and a softening point of 118°C (A-7) was obtained.

REFERENTIAL EXAMPLE 12

5

Preparation of polyester resin A:-

Referential Example 7 was repeated except that 27.4 parts of pyromellitic anhydride was used instead of 13 parts of tetrachlorophthalic anhydride, and the amount of trimellitic anhydride was changed to 15 parts. A polyester resin having an acid value of 19 and a softening point of 135°C (A-8) was obtained.

REFERENTIAL EXAMPLE 13

Preparation of polyester resin A:-

Referential Example 7 was repeated except that 26 parts of Het acid anhydride was used instead of 13 parts of tetrachlorophthalic anhydride, and the amount of trimellitic anhydride was changed to 16 parts. A polyester having an acid value of 25 and a softening point of 123°C (A-9) was obtained.

REFERENTIAL EXAMPLE 14

Preparation of polyester resin A:-

Referential Example 5 was repeated except that 37 parts of monochlorotrimellitic acid was used instead of 34 parts of monochlorotrimellitic anhydride, and instead of reacting at 200°C for 2 hours, dehydrocondensation reaction was carried out at the same temperature for 6 hours. A polyester resin having an acid value of 26 and a softening point of 124°C (A-10) was obtained.

REFERENTIAL EXAMPLE 15

Preparation of polyester resin A:-

Referential Example 5 was repeated except that the intermediate polyester (a-I-2) was used instead of the polyester (a-I-I) and the amount of monochlorotrimellitic anhydride was changed to 139 parts. A polyester resin having an acid value of 60 and a softening point of 115°C (A-II) was obtained.

REFERENTIAL EXAMPLE 16

Preparation of polyester resin A:-

Referential Example 5 was repeated except that the intermediate polyester (a-I-3) was used instead of the polyester (a-I-I) and the amount of monochlorotrimellitic anhydride was changed to 36 parts. A polyester resin having an acid value of 27 and a softening point of 120°C (A-12) was obtained.

REFERENTIAL EXAMPLE 17

Preparation of control polyester resin:-

Referential Example 5 was repeated except that 29 parts of trimellitic anhydride was used instead of 34 parts of monochlorotrimellitic anhydride. A polyester resin having an acid value of 25 and a softening point of 126°C (A'-I) was obtained.

REFERENTIAL EXAMPLE 18

Preparation of control polyester resin:-

Referential Example 5 was repeated except that the intermediate polyester (a-l-4) was used instead of the polyester (a-l-l), and the amount of monochlorotrimellitic anhydride was changed to ll parts. A polyester resin having an acid value of 24 and a softening point of 123°C for control (A′-2) was obtained.

## REFERENTIAL EXAMPLE 19

Preparation of control polyester resin:-

Referential Example 5 was repeated except that the amount of monochlorotrimellitic anhydride was changed to ll parts. A polyester resin having an acid value of l2 and a softening point of l24°C for control (A′-3) was obtained.

## REFERENTIAL EXAMPLE 20

Preparation of control polyester resin:-

Referential Example 5 was repeated except that 34 parts of monochlorotrimellitic anhydride was not used, and instead, 55 parts of tetrabromophthalic anhydride and 6 parts of trimellitic anhydride were used. A polyester having an acid value of 24 and a softening point of l22°C for control (A′-4) was obtained.

## REFERENTIAL EXAMPLE 2l

Referential Example 5 was repeated except that the intermediate polyester (a-l-2) was used instead of the polyester (a-l-l) and ll8 parts of trimellitic anhydride was used instead of 34 parts of monochlorotrimellitic anhydride. A polyester having an acid value of 59 and a softening point of ll6°C for control (A′-5) was obtained.

## EXAMPLES l-l5 and COMPARATIVE EXAMPLES l-6

In each run, the ingredients shown in Table I were mixed in the proportions indicated. The mixture was melt-kneaded by "Co-Kneader PR-46, supplied by Buss AG of Switzerland), and then finely pulverized. The pulverized product was sieved by a l50-mesh wire gauze. The fine powder which passed through the wire gauze was applied to a zinc phosphate-treated steel sheet having a thickness of 0.8 mm to a film thickness of 50 to 80 micrometers by an electrostatic spraying method, and then baked at 200°C for 20 minutes.

The powder paint and the resulting coated film were tested, and the results are shown in Table I.

7

Table 1

| | | | | Example | | | | | | | | | | | | | | |
|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 |
| Paint formulation (parts by weight) | Polyester resin | | (A-1) | 80 | 83 | 92 | | | | | | | | | | | | |
| | | | (A-2) | | | | 92 | | | | | | | | | | | |
| | | | (A-3) | | | | | 80 | 92 | | | | | | | | | |
| | | | (A-4) | | | | | | | 92 | | | | | | | | |
| | | | (A-5) | | | | | | | | 92 | | | | | | | |
| | | | (A-6) | | | | | | | | | 92 | | | | | | |
| | | | (A-7) | | | | | | | | | | 92 | | | | | |
| | | | (A-8) | | | | | | | | | | | 92 | | | | |
| | | | (A-9) | | | | | | | | | | | | 92 | | | |
| | | | (A-10) | | | | | | | | | | | | | 92 | | |
| | | | (A-11) | | | | | | | | | | | | | | 60 | |
| | | | (A-12) | | | | | | | | | | | | | | | 92 |
| | | | (A'-1) | | | | | | | | | | | | | | | |
| | | | (A'-2) | | | | | | | | | | | | | | | |
| | | | (A'-3) | | | | | | | | | | | | | | | |
| | | | (A'-4) | | | | | | | | | | | | | | | |
| | | | (A'-5) | | | | | | | | | | | | | | | |
| | Polyepoxy compound | | Epikote 1002 (*1) | 20 | | | | 20 | | | | | | | | | 40 | |
| | | | Epikote 1001 (*2) | | 17 | | | | | | | | | | | | | |
| | | | Epikote 828 (*3) | | | 8 | 8 | | 8 | 8 | 8 | 8 | 8 | 8 | 8 | 8 | | 8 |
| | Acronal 4F (*4) | | | 0.5 | | | | | | | | | | | | | | |
| | Titanium dioxide | | | 40 | | | | | | | | | | | | | | |
| Properties | Smoothness | | | very good | | | | | | | | | | | | | | |
| | 60° specular gloss | | | 95 | 94 | 97 | 98 | 96 | 96 | 92 | 95 | 93 | 96 | 93 | 94 | 96 | 99 | 93 |
| | Erichsen value (mm) | | | > 7 | | | | | | | | | | | | | | |
| | Impact strength (cm) (*5) | | | >50 | | | | | | | | | | | | | | |
| | Blocking resistance (*6) | | | very good | | | | | | | | | | | | | | |
| | Storage stability (*7) | | | good | | | | | | | | | | | | | wavy appearance | good |
| | Corrosion resistance (mm) (*8) | | | 1 > | | | | | | | | | | | | | | |
| | Weatherability (%) (*9) | | | 65 | 72 | 85 | 86 | 70 | 90 | 93 | 89 | 91 | 88 | 91 | 86 | 84 | 35 | 82 |

-- to be continued --

0 244 823

Table 1 (continued)

| | | | Comparative Example | | | | | |
|---|---|---|---|---|---|---|---|---|
| | | | 1 | 2 | 3 | 4 | 5 | 6 |
| Paint formulation (parts by weight) | Polyester resin | (A-1) | | | | | | |
| | | (A-2) | | | | | | |
| | | (A-3) | | | | | | |
| | | (A-4) | | | | | | |
| | | (A-5) | | | | | | |
| | | (A-6) | | | | | | |
| | | (A-7) | | | | | | |
| | | (A-8) | | | | | | |
| | | (A-9) | | | | | | |
| | | (A-10) | | | | | | |
| | | (A-11) | | | | | | |
| | | (A-12) | | | | | | |
| | | (A'-1) | 80 | 92 | | | | |
| | | (A'-2) | | | 83 | | | |
| | | (A'-3) | | | | 92 | | |
| | | (A'-4) | | | | | 92 | |
| | | (A'-5) | | | | | | 60 |
| | Polyepoxy compound | Epikote 1002 (*1) | 20 | | | | | 40 |
| | | Epikote 1001 (*2) | | | 17 | | | |
| | | Epikote 828 (*3) | | 8 | | 8 | 8 | |
| | Acronal 4F (*4) | | 0.5 | | | | | |
| | Titanium dioxide | | 40 | | | | | |
| Properties | Smoothness | | good | | | | | |
| | 60° specular gloss | | 96 | 97 | 95 | 90 | 94 | 98 |
| | Erichsen value (mm) | | > 7 | | < 1 | | | > 7 |
| | Impact strength (cm) (*5) | | >50 | | 10 | | | >50 |
| | Blocking resistance (*6) | | poor | | good | | | slightly poor |
| | Storage stability (*7) | | good | | | | | wavy appearance |
| | Corrosion resistance (mm) (*8) | | 1 > | | | | | |
| | Weatherability (%) (*9) | | 63 | 80 | 12 | 5 | 25 | 3 |

0 244 823

(\*l): bisphenol-type epoxy resin made by Shell Chemical Co. of Netherlands (epoxy equivalent 650)

(\*2): bisphenol-type epoxy resin made by Shell Chemical Co. of Netherlands (epoxy equivalent 475)

(\*3): bisphenol-type epoxy resin made by Shell Chemical Co. of Netherlands (epoxy equivalent 190)

(\*4): Acrylic polymer (flow control agent produced by BASF, West Germany

(\*5): Du Pont impact strength, 1/2 inch-500 g

(\*6): Evaluated by the degree of aggregation of the powder paint stored for one month in a constant temperature machine at 40°C.

(\*7): Smoothness of a coated film obtained by using a paint stored for one month in a constant temperature machine at 40°C.

(\*8): Expressed by the width of a peeled adhesive tape at a crosscut portion after it was subjected to a salt spray test at 35°C for 500 hours.

(\*9): Gloss retention after exposure for 500 hours to a Sunshine Weather-O-meter.

The above examples demonstrate that the present invention can give a resin composition for powder paints having much improved blocking resistance and capable of giving a coated film having excellent appearance, mechanical strength, weatherability and corrosion resistance.

**Claims**

l. A resin composition for use in a powder paint, consisting essentially of

(A) 60 to 97 parts by weight of a polyester having an acid value of l5 to l00 KOH mg/g and a softening point, determined by the ring and ball method, of 70 to l50°C and obtained by reacting (a-l) a polyester having a hydroxyl value of l0 to 70 KOH mg/g and an acid value of 2 to l0 KOH mg/g and (a-2) a halogenated polycarboxylic acid or a halogenated polycarboxylic anhydride, and

(B) 40 to 3 parts by weight of a polyepoxy compound having at least 2 epoxy groups per molecule.

2. The resin composition of claim l wherein the halogenated polycarboxylic acid (a-2) is a tetrahalophthalic acid.

3. The resin composition of claim l wherein the halogenated polycarboxylic acid (a-2) is a tetrahaloisophthalic acid.

4. The resin composition of claim l wherein the halogenatd polycarboxylic acid (a-2) is a tetrahaloterephthalic acid.

5. The resin composition of claim l wherein the halogenated polycarboxylic acid (a-2) is halogenated trimellitic acid.

6. The resin composition of claim l wherein the halogenated polycarboxylic acid (a-2) is halogenated pyromellitic acid.

7. The resin composition of claim l wherein the halogenated polycarboxylic anhydride (a-2) is a tetrahalophthalic anhydride.

8. The resin composition of claim I wherein the halogenated polycarboxylic anhydride (a-2) is halogenated trimellitic anhydride.

9. The resin composition of claim I wherein the halogenated polycarboxylic anhydride (a-2) is halogenated pyromellitic anhydride.

10. The resin composition of claim I wherein the halogenated polycarboxylic anhydride (a-2) is tetrachlorophthalic anhydride.

11. The resin composition of claim I wherein the halogenated polycarboxylic anhydride (a-2) is monochlorotrimellitic anhydride

12. The resin composition of claim I wherein the halogenated polycarboxylic anhydride (a-2) is dichlorosuccinic anhydride.

13. The resin composition of claim I wherein the halogenated polycarboxylic anhydride (a-2) is dibromopyromellitic anhydride.

14. The resin composition of claim I wherein the polyepoxy compound (b) is a diglycidyl ether of bisphenol A.